# EUROPEAN PATENT SPECIFICATION

(11) **EP 0 703 163 B1**
(45) Date of publication and mention of the grant of the patent: **10.06.1998**
(21) Application number: 95201969.3
(22) Date of filing: 02.07.1992
(51) Int. Cl.: B65G 13/06, B65G 13/07

(54) **Conveyor drive chains**
Antriebsketten für Förderer
Chaînes d'entraînement pour convoyeur

(30) Priority: 03.07.1991 US 725644; 01.07.1992 US 907013
(43) Date of publication of application: 27.03.1996
(62) Divisional of application: 92915575.2
(73) Proprietor: HK Systems, Inc., New Berlin, Wisconsin 53151 (US)
(72) Inventor: Heit, Martin A., Cincinnati, OH 45231 (US); Wilkins, John J., Cincinnati, OH 45245 (US); Rau, William C., Florence, KY 41042 (US)
(74) Representative: Weatherald, Keith Baynes

(56) References cited:
- EP-A- 0 068 886
- DE-A- 1 953 823
- GB-A- 1 235 687
- US-A- 2 792 928
- US-A- 5 042 244

## Description

This invention relates to drive chains, particularly for endless belts. In so-called 'accumulation conveyors' consisting of a series of load-bearing rollers, the rollers may be selectively rotated, so as to transfer goods resting on the rollers, by selectively pressing into contact with them incremental lengths of continuously-driven drive chain.

The drive chain of this invention is of the roller chain type, in that it has links consisting of rollers and side plates, the rollers being mounted for rotation on pins which connect the side plates. A drive chain of this type is described in US-A-5 042 244. In the roller chain of this invention, pairs of short side plates alternate with pairs of long side plates, and the long side plates are adapted to carry pads intended to rotate superposed rollers by being brought into frictional contact with them when the respective length of moving chain is urged upwardly.

EP-A-0 068 886 (Lear Siegler) discloses a drive chain in which the links are all of the same pitch, and in which each link has a drive transmission element secured to it. Each element has projecting from its rear face a split-ended tongue of resilient material which extends between a pair of adjacent rollers to engage them resiliently to hold the element in place. This chain suffers from the disadvantage that, should the chain become misregistered with the teeth of the sprocket wheel which drives the chain, the teeth can push the tongues out of engagement with the rollers, and thus cause the elements to fall from the chain.

The endless drive chain fitted with drive pads of this invention represents a marked improvement over known endless chains, and is as claimed in the appended claims. More specifically, it incorporates a series of standard-pitch roller chain links coupled together by pairs of longer side plates, which are configured to receive plastics drive pads that clip into recesses in the side plates. Each drive pad segment is a parallelogram in plan. The belt configuration permits the belt to pass around sprocket wheels at opposite ends of the conveyor without jamming and without there being any possibility that the sprocket teeth may come into contact with any part of the pads. When the chain is biassed upwardly, the drive pads contact the undersides of the rollers for driving them without slippage.

The present invention will now be described by way of example with reference to the accompanying drawings, in which:
Figure 1 is a perspective view of a length of the drive chain of the present invention for use with an accumulating conveyor;
Figure 2 is a top plan view of the length of drive chain of Fig. 1 over a fragment of the drive sprocket;
Figure 3 is a vertical, cross-sectional, view of the drive chain and a fragment of the drive sprocket about which the drive chain passes, such view being taken along line III-III in Fig. 2 and in the direction indicated;
Figure 4 is a side elevational view of a few links in the drive chain;
Figure 5 is a vertical, cross-sectional view of the drive chain, such view being taken along line V-V in Fig. 4 and in the direction indicated;
Figure 6 is a top plan view of the fragment of drive chain shown in Fig. 5, and
Figure 7 is a bottom plan view of a pad that is engaged with the roller links of the drive chain.

An endless drive chain 24 extends along the length of conveyor 10. A first upwardly-opening extrusion 26 receives the lower run of chain 24, while a second upwardly-opening extrusion 28 receives the upper run of endless chain 24. One leg of U-shaped control channel 30 is secured to channel 12 by bolts or other fasteners, while the base of channel 30 is secured to spreader 16 by fastening clip 32. A bolt 34 and nut 36 retains the clip 32 in fixed position, and a retainer 38 maintains the extrusion 26 in fixed position.

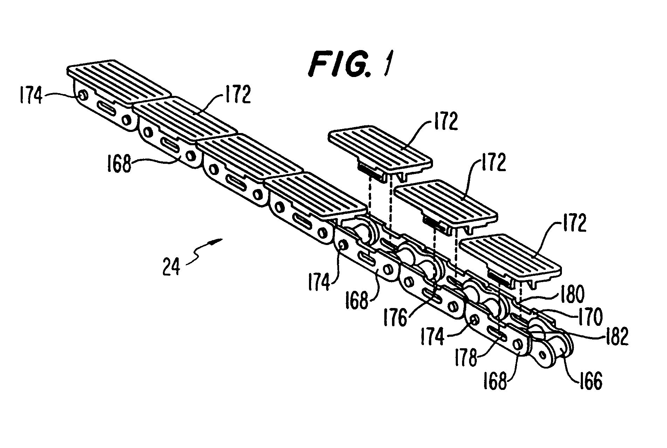

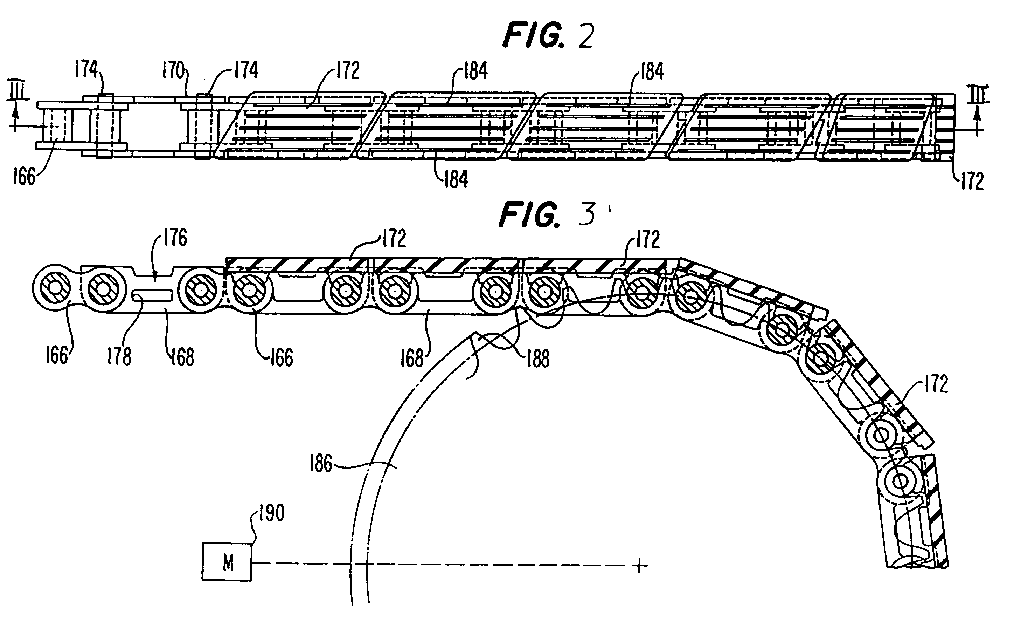

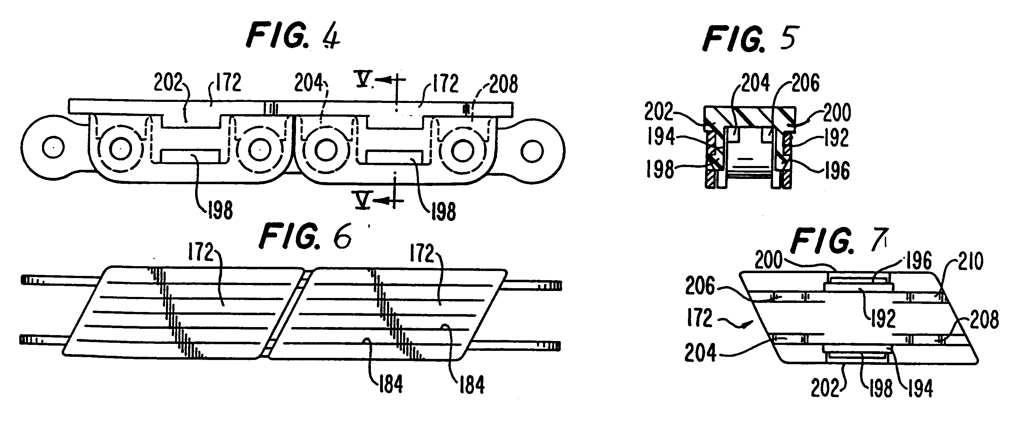

Fig. 1 depicts a length of endless chain 24 that selectively contacts rollers 18, and, when in contact, imparts force thereto to rotate them. Endless chain 24 includes standard-pitch roller chain links 166 coupled together by means of double-pitch side plates 168, 170. Plastics drive pads 172 are snapped into latching engagement with side plates 168, 170. Some of the drive pads 172 in Fig. 1 are shown positioned above the side plates 168, 170, prior to being seated thereon. The parallelogram shape of drive pads 172, when viewed from above, is shown in Figs. 2 and 6.

Each pin 174 extends transversely through longer side plates 168, 170, standard-pitch side plates 166, and rollers (not referenced), so that the rollers may rotate relative to the side plates. Notches 176, 180 are formed in the edge faces of side plates 168, 170 and slots 178, 182 are formed in the side plates below the notches, in vertical alignment. The edge faces of the side plates are substantially planar to provide additional support for the drive pads.

Fig. 2 shows that each drive pad 172, because of its parallelogram configuration, has its ends extending beyond the ends of the longer side plates 168, 170. At least the apex of the pad extends a small distance over the adjacent standard-pitch links in the endless chain; such shape reduces the chatter usually associated with rectangular drive pads on padded chains, and also ensures that contact with the rollers 18 can be maintained, at all times, when the rollers 18 are driven by the drive chain 24. Parallel grooves 184 are formed in the drive surface of each drive pad 172 to enhance the frictional contact and effectiveness of the pads 172 when such pads are engaged with rollers 18. As can be seen from Figs. 2 and 6, each pad is spaced axially from its neighbour by a gap of constant width, to ensure that the pads never come into contact with each other once in place. It can also be seen that each pad is wider than the maximum width of the chain itself, to increase the contact area between each pad and the transport rollers.

Fig. 3 shows the manner in which endless chain 24 engages the drive sprocket 186. The teeth 188 on the drive sprocket project upwardly between side plates 168, 170, and the roller links 166 fit into the valleys formed between adjacent teeth 188, so that the chain conforms to the curvature of the sprocket. An electrical motor 190 rotates drive sprocket 186 to deliver rotational forces to rollers 18, when the drive chain is elevated into contact with the rollers. A gear reducer (not shown) may be interposed between motor 190 and the shaft upon which the sprocket is secured. Drive sprocket 186 is located at the inlet, or head end, of the accumulating conveyor. A similar sprocket (not shown) is located at the tail, or discharge end, of the conveyor; thus, the endless chain 24 extends the length of the conveyor in an upper run, and a lower, parallel, run.

Figs. 4-6 show the manner in which each drive pad 172 is latched into engagement with the side plates 168, 170 of the endless chain 24, while Fig. 7 shows the underside of a drive pad 172. Each drive pad 172 is a unitary molded plastics component, including a planar drive surface with grooves 184, and a pair of tongues 192, 194 spaced inwardly from the sides of the drive pad and projecting from the remote face of the pad. Tongues 192, 194 fit between side plates 168, 170, and the lower ends of the tongues have outwardly-projecting lugs 196, 198. A first projection 200 is formed adjacent one side of drive pad 172, and a second, identical projection 202 is formed adjacent the other side.

Pairs of arcuate saddles 204, 206 project from the same remote face of the drive pad, while pairs of arcuate saddles 208, 210 are formed near the other end of the drive pad. In order to secure each drive pad 172 to the chain, it is pressed downwardly into seating engagement with the side plates 168, 170 of the endless chain 24. In so doing, the tongues 192, 194 move downwardly until projecting lugs 196, 198 flex outwardly into slots 178, 182; projections 200, 202 fit into notches 176, 180 in the side plates, and saddles 204, 206 and 208, 210 fit about the rollers retained between the side plates 168, 170. The tongues, lugs, projections, seats, etc. are molded within close tolerances so that the drive links can readily be snapped into engagement with the endless chain, and can be removed therefrom, for replacement as necessary.

Accordingly it will be seen that the present invention provides a drive chain fitted with drive pads, which chain is relatively quiet in operation, and in which the drive pads are not able to come into contact either with each other or with the sprocket teeth driving the chain.

## Claims

1. A roller chain (24) for use in a conveyor, the chain comprising:
links consisting of pairs of parallel side plates (168, 170) connected together, and spaced apart from each other, by pairs of pins (174) encircled by rollers (166), with adjacent side plates being of different lengths, so that short (166) and long (168, 170) side plates alternate along the length of the chain;
a slot (178, 182) formed in each long side plate between the respective rollers;
a molded plastics drive pad (172) presenting a planar contact surface, and having a pair of tongues (192, 194), and a pair of projections (200, 202), projecting from the opposite face of the pad, with projecting lugs (196, 198) extending laterally outwardly from the ends of the tongues;
the drive pad being seated on each pair of long side plates and being retained in position by the tongues (192, 194) extending into the space between the side plates with the lugs (196, 198) engaged in the slots (178, 182), and with the projections (200, 202) being seated in corresponding recesses (176, 180) in the respective edge faces of the side plates.

2. A chain as claimed in claim 1, wherein pairs of arcuate saddles (204, 206) project from the underside of each drive pad, the saddles being intended to contact the rollers when the drive pad is in place on the side plates.

3. A roller chain as claimed in claim 1 or 2, in which each drive pad has its ends extending beyond the ends of the respective side plates.

4. A roller chain as claimed in any preceding claim, in which the shape of each drive pad is a parallelogram in plan, in which the pads are spaced apart longitudinally by a gap of substantially uniform width, and in which the apex at each end of each pad overlaps longitudinally the apex at the respective end of the adjacent pad.

5. A roller chain as claimed in any preceding claim, in which the two major faces of each pad are parallel to each other and are coextensive.

6. A roller chain as claimed in any preceding claim, in which the width of each drive pad (172), perpendicular to the width of the chain, is equal to or greater than the distance between the outside faces of the side plates.

7. A roller chain as claimed in any preceding claim, in which the length of the long side plates (168, 170) is twice the length of the short side plates (166).

## Patentansprüche

1. Rollenkette (24) zur Verwendung in einem Fördersystem, wobei die Kette enthält:
Kettenglieder aus Paare von parallelen Seitenplatten (168, 170), die durch Paare von Zapfen (174) miteinander verbunden und voneinander beabstandet sind, die durch Rollen (166) führen, wobei benachbarte Seitenplatten unterschiedliche Längen haben, so dass sich längs der Kette kurze (166) und lange Seitenplatten (168, 170) einander abwechseln;
einem Schlitz (178, 182), der in jeder langen Seitenplatte zwischen den entsprechenden Rollen ausgebildet ist;
eine kunststoffgespritzten Mitnehmerplatte (172), die eine ebene Auflagefläche bildet und ein Paar von Zungen (192, 194) und ein Paar von Fortsätzen (200, 202) aufweist, die von der gegenüberliegenden Seite der Mitnehmerplatte wegstehen, wobei abstehende Laschen (196, 198) seitlich von den Enden der Zungen nach außen wegstehen;
wobei die Mitnehmerplatte auf jedem Paar von langen Seitenplatten sitzt und durch die Zungen (192, 194) lagerichtig gesichert ist, die in den Raum zwischen den Seitenplatten hineinragen, wobei die Laschen (196 198) in die Schlitze (178, 182) eingreifen und die Fortsätze (200, 202) in entsprechenden Ausnehmungen (176, 180) in den entsprechenden Seitenkanten der Seitenplatten sitzen.

2. Rollenkette nach Anspruch 1, bei der Paare von gekrümmten Sätteln (204, 206) von der Unterseite jeder Mitnehmerplatte wegstehen und die Sättel dazu vorgesehen sind, an den Rollen zur Anlage zu kommen, wenn die Mitnehmerplatte sich auf den Seitenplatten an Ort und Stelle befindet.

3. Rollenkette nach Anspruch 1 oder 2, bei der sich die Enden jeder Mitnehmerplatte über die Enden der entsprechenden Seitenplatten hinaus erstrecken.

4. Rollenkette nach einem der vorhergehenden Ansprüche, bei der jede Mitnehmerplatte in der Draufsicht parallelogrammförmig ist, die Mitnehmerplatten in Längsrichtung durch Lücken von im Wesentlichen gleicher Breite voneinander beabstandet sind und die Spitze an jedem Ende jeder Mitnehmerplatte in Längsrichtung mit der Spitze an dem entsprechenden Ende der benachbarten Mitnehmerplatte überlappt.

5. Rollenkette nach einem der vorhergehenden Ansprüche, bei der die beiden langen Kante jeder Mitnehmerplatte zueinander parallel sind und sich in dieselbe Richtung erstrecken.

6. Rollenkette nach einem der vorhergehenden Ansprüche, bei der die Breite jeder Mitnehmerplatte (172), gemessen rechtwinklig zu der Breite der Kette, gleich oder größer als der Abstand zwischen den Außenseite jeder Seitenplatte ist.

7. Rollenkette nach einem der vorhergehenden Ansprüche, bei der die Länge der langen Seitenplatten (168, 170) zweimal so groß ist wie die Länge der kurzen Seitenplatte (166).

## Revendications

1. Chaîne à rouleaux (24) pour une utilisation dans un transporteur, la chaîne comportant :
des maillons composés de paires de plaques latérales parallèles (168, 170) reliées ensemble, et espacées l'une de l'autre, par une paire d'axes (174) encerclés par des rouleaux (166), avec des plaques latérales adjacentes qui sont de longueurs différentes, de sorte que des plaques latérales courtes (166) et longues (168, 170) sont alternées sur la longueur de la chaîne;
une fente (178, 182) formée dans chaque plaque latérale longue entre les rouleaux respectifs,
un patin d'entraînement en matière plastique moulée (172) présentant une surface de contact plane, et ayant une paire de pattes (192, 194), et une paire de saillies (200, 202) qui dépassent de la face opposée du patin, avec des parties saillantes (196, 198) qui s'étendent latéralement vers l'extérieur depuis les extrémités des pattes;
le patin d'entraînement étant en appui sur chaque paire de plaques latérales longues et étant retenu en position par les pattes (192, 194) qui s'étendent dans l'espace entre les plaques latérales avec les parties (196, 198) engagées dans les lentes (178, 182), et avec les saillies (200, 202) qui sont en appui dans des renfoncements (176, 180) correspondants dans les faces de bord respectives des plaques latérales.

2. Chaîne selon la revendication 1, dans laquelle des paires de supports courbes (204, 206) dépassent du côté inférieur de chaque patin d'entraînement, les supports étant prévus pour venir en contact avec les rouleaux lorsque le patin d'entraînement est en place sur les plaques latérales.

3. Chaîne à rouleaux selon la revendication 1 ou 2, dans laquelle chaque patin d'entraînement a ses extrémités qui s'étendent au-delà des extrémités des plaques latérales respectives.

4. Chaîne à rouleaux selon l'une quelconque des revendications précédentes, dans laquelle la forme de chaque patin d'entraînement est un parallélogramme en plan, dans laquelle les patins sont espacés longitudinalement par un espace de largeur sensiblement uniforme, et dans laquelle le sommet de chaque extrémité de chaque patin chevauche longitudinalement le sommet au niveau de l'extrémité respective du patin adjacent.

5. Chaîne à rouleaux selon l'une quelconque des revendications précédentes, dans laquelle les deux faces principales de chaque patin sont parallèles l'une à l'autre et sont coextensives.

6. Chaîne à rouleaux selon l'une quelconque des revendications précédentes, dans laquelle la largeur de chaque patin d'entraînement (172), perpendiculairement à la largeur de la chaîne, est égale ou supérieure à la distance entre les faces extérieures des plaques latérales.

7. Chaîne à rouleaux selon l'une quelconque des revendications précédentes, dans laquelle la longueur des plaques latérales longues (168, 170) est le double de la longueur des plaques latérales courtes (166).
